# EUROPÄISCHE PATENTANMELDUNG

(11) **EP 3 799 241 A1**
(43) Veröffentlichungstag der Anmeldung: **31.03.2021**
(21) Anmeldenummer: 19199462.3
(22) Anmeldetag: 25.09.2019
(51) Int. Cl.: H02H 9/04, H02H 9/06

(54) **ÜBERSPANNUNGSSCHUTZSCHALTUNGSANORDNUNG**

(71) Anmelder: Siemens Aktiengesellschaft, 80333 München (DE)
(72) Erfinder: Kosik, Leonard, 916 21 Cachtice (SK)
(74) Vertreter: Maier, Daniel Oliver

(57) **Zusammenfassung**

Die Erfindung betrifft eine Schaltungsanordnung für einen Überspannungsschutz für eine Stromversorgung (SN) bzw. für ein Schaltnetzteil (SN). Das Schaltnetzteil (SN) wird dabei über ein Versorgungsnetz mit einer Netzspannung versorgt, wobei das Versorgungsnetz zumindest drei Außenleiter (L1, L2, L3) und einen Schutzleiter (PE) aufweist. Die Schaltungsanordnung umfasst drei Varistoren (V21, V22, V23). Dabei ist ein erster Varistor (V21) über einen ersten Anschlusspunkt mit einem ersten Außenleiter (L1) des Versorgungsnetzes elektrisch verbunden. Ein zweiter Varistor (V22) ist über einen ersten Anschlusspunkt mit einem zweiten Außenleiter (L2) des Versorgungsnetzes elektrisch verbunden und ein dritter Varistor (V23) ist über einen ersten Anschlusspunkt mit einem dritten Außenleiter (L3) des Versorgungsnetzes elektrisch verbunden. Außerdem sind der erste, zweite und dritte Varistor (V21, V22, V23) mit einem jeweiligen zweiten Anschlusspunkt elektrisch in einem Verbindungspunkt (VP) miteinander elektrisch verbunden. Weiterhin weist die Überspannungsschutzschaltung einen vierten Varistor (V24) auf, welcher mit einen ersten Anschlusspunkt elektrisch mit dem Verbindungspunkt (VP) und mit einem zweiten Anschlusspunkt mit dem Schutzleiter (PE) verbunden ist. Dabei ist zum vierten Varistor (V24) eine Sicherungseinheit (S) in Serie angeordnet.

## Beschreibung

### Technisches Gebiet

Die gegenständliche Erfindung betrifft allgemein das Gebiet der Elektrotechnik, insbesondere den Bereich der Leistungselektronik sowie leistungselektronischer Schaltungen. Im Speziellen bezieht sich die vorliegende Erfindung auf eine Schaltungsanordnung für einen Überspannungsschutz für eine Stromversorgung bzw. für ein Schaltnetzteil. Das Schaltnetzteil wird dabei über ein Versorgungsnetz mit einer Netzspannung versorgt, wobei das Versorgungsnetz zumindest drei Außenleiter und einen Schutzleiter aufweist.

### Stand der Technik

In der Automatisierungstechnik werden heutzutage für eine Stromversorgung von Verbrauchern, wie z.B. Steuerungseinheiten bzw. Steuerungselektronik, Alarm- und Signaleinheiten, Lüftungseinheiten, etc. Stromversorgungen bzw. Schaltnetzteile eingesetzt. Derartige Schaltnetzteile liefern für die Versorgung eines oder mehrerer angeschlossener Verbraucher üblicherweise eine vordefinierte Versorgungsspannung (z.B. 24V Gleichspannung als Nennausgangsspannung). Eine derartige Stromversorgung bzw. ein derartiges Schaltnetzteil wird meist über ein drei- bzw. mehrphasiges Versorgungsnetz, z.B. in Form einer Stromschiene, an welche beispielsweise weitere Anlagenteile (z.B. Motoren, Antriebe, etc.) für eine Energieversorgung angeschlossen sind, mit einer Netzspannung bzw. dreiphasigen Wechselspannung von z.B. 400 bis 500 Volt versorgt.

Ein drei- bzw. mehrphasiges Versorgungsnetz weist dabei üblicherweise drei so genannte Außenleiter oder Phasen zur Spannungsführung sowie einen so genannten Schutzleiter auf. Der Schutzleiter dient dabei der so genannten Schutzerdung der Anlage, um im Falle eines Schlusses eines aktiven - d.h. spannungsführenden - Leiters mit einem leitfähigen Teil der Anlage (z.B. Gehäuse, etc.) diesen auf Erdpotential zu halten und so insbesondere Lebewesen vor einem so genannten "elektrischen Schlag (d.h. einem Stromfluss durch den Körper) zu schützen. Weiterhin wird bei dreiphasig ausgeführten Versorgungsnetzen bzw. Stromversorgungssystemen meist kein so genannter Neutral- oder Nullleiter mitgeführt, um eine zusätzliche Leitung einzusparen. Dadurch wird es beispielsweise nötig, Stromversorgungen bzw. Schaltnetzteile einzusetzen, welche aus einer dreiphasigen Wechselspannung des Versorgungsnetzes von z.B. 400 bis 500 Volt eine 24V-Gleichspannung erzeugen können.

Durch eine steigende Komplexität elektrischer Anlagen, vor allem im Bereich der Automatisierungstechnik, können zunehmend Netzrückwirkungen der diversen an das Versorgungsnetz angebundener Geräte bzw. Verbraucher (z.B. Motoren, Antriebe, Stromversorgungen, etc.) auftreten. Insbesondere bei Schalthandlungen am Versorgungsnetz, wie z.B. beim Auslösen einer Sicherung im Fehlerfall (z.B. Kurzschluss, Erdschluss in einem Anlagenteil, etc.), beim Weg- oder Anschalten einer großen Last, etc. können durch eine induktive Wirkung von längeren Zuleitungen, durch welche versucht wird, den Strom aufrecht zu erhalten, Überspannungsimpulse - so genannte Surge-Impulse - entstehen.

Eine Überspannung ist eine elektrische Spannung in einem elektrischen Versorgungsnetz bzw. System, von welcher ein Toleranzbereich der jeweiligen Nennspannung (d.h. der von einem Hersteller und/oder Lieferanten spezifizierte Wert der elektrischen Spannung im Normalbetrieb des jeweiligen Verbrauchers) überschritten wird. Überspannungen können damit zu Stör- oder Fehlerfällen durch z.B. Zerstörung und/oder Beschädigung von Bauelementen oder Bestandteilen einer Anlage führen. Auftretende Überspannungen bzw. Überspannungsimpulse können z.B. symmetrisch - d.h. zwischen zwei Außenleitern des Versorgungsnetzes - oder asymmetrisch bzw. unsymmetrisch - d.h. zumindest ein Außenleiter des Versorgungsnetzes führt eine Überspannung gegen Erde bzw. gegen den Schutzleiter des Versorgungsnetzes - auftreten.

Einer Überspannung bzw. einem Überspannungsimpuls im Versorgungsnetz müssen auch Verbraucher mit verhältnismäßig geringer Leistung, wie z.B. Stromversorgungen bzw. Schaltnetzteile, standhalten. Dabei sind derartige Überspannungsimpulse meist wesentlich größer als eine Sinusscheitelspannung der Versorgungs- bzw. Netzspannung (z.B. 400 bis 500 Volt) des Versorgungsnetzes. Zum Schutz und zur Begrenzung von aus dem Versorgungsnetz kommenden - symmetrischen und/oder asymmetrischen - Überspannungsimpulsen werden daher Überspannungsschutzschaltungen eingesetzt, welche meist Varistoren - häufig in Kombination mit Sicherungseinheiten - umfassen.

Ein Varistor ist ein elektronisches Bauteil, welches sich durch einen spannungsabhängigen Widerstand auszeichnet. Bei einem Betrieb im Bereich der Nennspannung des jeweiligen Verbrauchers bzw. im Normalbetrieb (z.B. bei Netzspannung) ist der Widerstand des Varistors sehr groß, sodass sein Verhalten ein Schaltnetzteil nicht beeinflusst. Oberhalb eines vorgegebenen Schwellspannungswertes bzw. eines vorgegebenen Nennwertes des Varistors, welcher für den jeweiligen Varistor typisch ist, wird der differentielle Widerstand des Varistors mit steigender anliegender Spannung fast verzögerungsfrei relativ klein. Eine Polarität von Spannung und Strom spielt dabei keine Rolle. Dadurch eignen sich Varistoren für einen Einsatz in Schaltungen zum Schutz vor Überspannungen von empfindlichen Schaltungen, wie z.B. Stromversorgungen bzw. Schaltnetzteilen.

Durch den Einsatz von Überspannungsschutzschaltungen mit Varistoren kann ein Überspannungsimpuls durch Aufbau einer großen Impuls-Verlustleistung auf einen vorgebbaren bzw. einschätzbaren Überspannungswert begrenzt werden. Weiterhin können mit Hilfe einer Überspannungsschutzschaltung z.B. sehr hohe Ströme entsprechend abgeleitet werden, welche im Zuge eines symmetrischen oder asymmetrischen Überspannungsimpulses auftreten können.

Aus dem Datenbuch "EPCOS Data Book 2018 - SIOV Metal Oxide Varistors" der EPCOS AG - A TDK Group Company; Edition 2018; Seite 67 bis 68. sind beispielsweise Schaltungen zum Überspannungsschutz einer Stromversorgung bzw. eines Schaltnetzes bei symmetrischen und asymmetrischen Überspannungen bekannt. Dabei werden beispielsweise drei Varistoren, welche zwischen den Außenleitern des Versorgungsnetzes angeordnet sind, für den Überspannungsschutz bei symmetrischen Überspannungs- oder Surge-Impulsen eingesetzt. Weiterhin sind drei Varistoren für einen Überspannungsschutz bei asymmetrischen Überspannungs- bzw. Surge-Impulsen vorgesehen, welche jeweils mit einer Sicherungseinheit in Serie geschaltet sind. Die Serienschaltung aus Varistor und Sicherungseinheit ist dann zwischen dem jeweiligen Außenleiter und dem Schutzleiter angeordnet. Die jeweiligen Sicherungseinheiten sind dabei z.B. als Thermosicherung ausgeführt und können z.B. mit dem jeweiligen Varistor gekoppelt oder in diesen integriert sein. Dadurch kann es beispielsweise zu Problemen bei Isolationstests mit Hochspannung, um z.B. ein Einhalten von Sicherheitsnormen, wie z.B. die so genannte UL508 (UL steht für Unterwriters Laboratories Inc.® - einer der weltweit führenden Organisationen für die Prüfung und Zertifizierung im Bereich der Produktsicherheit) oder die IEC 60950-1 der Internationalen Elektrotechnischen Kommission bzw. der International Electrotechnical Commission, zu überprüfen.

Um beispielsweise Sicherungseinheiten einzusparen und gegebenfalls Probleme bei Überspannungstests umgehen zu können, besteht z.B. die Möglichkeit beim Überspannungsschutz bei asymmetrischen Überspannungs- bzw. Surge-Impulsen die drei Varistoren mittels eines Verbindungspunkten elektrisch verbunden werden. Zwischen diesem Verbindungspunkt und dem Schutzleiter ist dann nur eine Sicherungseinheit angeordnet. Zusätzlich werden allerdings weiterhin drei Varistoren zwischen den Außenleitern benötigt, um symmetrische Überspannungs- bzw. Surge-Impuls zu begrenzen.

Derartige Überspannungsschutzschaltungen erweisen sich allerdings dahingehend als nachteilig, dass sie aufgrund der Anzahl an verwendeten Varistoren einen relativ hohen Platzbedarf aufweisen. Bedingt durch relativ hohe Sicherheits-Spannungsabstände erhöht beispielsweise jeder zusätzliche Varistor den Platzbedarf erhöhen. Weiterhin sind diese Überspannungsschutzschaltungen wegen der Anzahl an verwendeten Bauteilen auch relativ kostenintensiv.

### Darstellung der Erfindung

Der Erfindung liegt daher die Aufgabe zugrunde, eine Schaltungsanordnung für eine Überspannungsschutz für eine Stromversorgung bzw. für ein Schaltnetzteil anzugeben, welche Verbesserungen gegenüber dem Stand der Technik aufweist. Zudem soll eine aus dem Stand der Technik bekannte Überspannungsschutzschaltung in der Weise weitergebildet werden, dass sie einen wesentlich geringen Platzbedarf aufweist und kostengünstiger realisierbar ist.

Diese Aufgabe wird durch eine Überspannungsschutzschaltungsanordnung der eingangs angeführten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch eine Überspannungsschutzschaltungsanordnung für eine Stromversorgung bzw. ein Schaltnetzteil, welches über ein Versorgungsnetz mit einer Netzspannung versorgt wird. Dabei weist das Versorgungsnetz zumindest drei Außenleiter und einen Schutzleiter auf. Die Schaltungsanordnung für einen Überspannungsschutz umfasst dabei drei Varistoren, wobei ein erster Varistor mit einem jeweiligen ersten Anschlusspunkt elektrisch mit einem ersten Außenleiter des Versorgungnetzes verbunden ist.

Ein zweiter Varistor ist mit einem jeweiligen ersten Anschlusspunkt mit einem zweiten Außenleiter des Versorgungnetzes elektrisch verbunden und ein dritter Varistor ist mit einem jeweiligen ersten Anschlusspunkt mit einem dritten Außenleiter des Versorgungsnetzes elektrisch verbunden. Weiterhin sind der erste, zweite und dritte Varistor mit einem jeweiligen zweiten Anschlusspunkt elektrisch in einem Verbindungspunkt miteinander verbunden. Mit diesem Verbindungspunkt ist ein vierter Varistor über einen ersten Anschlusspunkt elektrische verbunden. Weiterhin ist der vierte Varistor mit einem zweiten Anschlusspunkt mit dem Schutzleiter des Versorgungsnetzes verbunden. Dabei ist zum vierten Varistor eine Sicherungseinheit in Serie angeordnet.

Der Hauptaspekt der erfindungsgemäß vorgeschlagenen Lösung besteht darin, dass durch die vorgeschlagene, erfindungsgemäße Schaltungsanordnung platzsparend und kostengünstig ein Überspannungsschutz für eine Stromversorgung bzw. ein Schaltnetzteil realisiert werden kann. Die erfindungsgemäße Überspannungsschutzschaltung kombiniert einen Überspannungsschutz für symmetrische und asymmetrische Überspannungs- bzw. Surge-Impulsen für die zu schützende Stromversorgung. Dadurch kann die Anzahl der eingesetzten Varistoren gegenüber üblicherweise verwendeten Überspannungsschutzschaltungen reduziert werden. Dies führt zu einer kleineren und platzsparenden Schaltungsanordnung sowie zu einer Kostenersparnis, wobei die bisherige Schutzfunktion für die Stromversorgung bzw. das Schaltnetzteil beibehalten wird.

Es ist weiterhin vorteilhaft, wenn der erste, zweite und dritte Varistor einen ersten vorgegebenen Schwellspannungswert und der vierte Varistor ein zweiten vorgegebenen Schwellspannungswert aufweisen. Die vorgegebenen Schwellspannungswerte sind dabei derart gewählt, dass von einem Schwellspannungswert einer Serienschaltung aus erstem Varistor oder zweitem Varistor oder drittem Varistor mit dem vierten Varistor ein Summenwert zumindest erreicht oder überschritten wird, wobei der Summenwert aus einem maximal zulässig auftretenden Wert der Netzspannung für das Schaltnetzteil und einem vorgegebenen Toleranzwert besteht. Dies weist den Vorteil weitere Kosten- und Platzersparnis auf. Es können daher z.B. Varistoren mit geringeren Schwell- oder Nennspannungen - ohne Verlust der Schutzfunktion - für die Schaltungsanordnung verwendet werden, da nur die Serienschaltung des ersten, zweite oder dritten Varistors mit dem vierten Varistor auf den Summenwert aus maximal zulässiger Netzspannung (z.B. 400 bis 500 V) und einem vorgegebenen Toleranzwert (z.B. +/-25%) ausgelegt sein muss. Dabei kann der Toleranzwert beispielsweise durch Schutznormen, wie z.B. die IEC 60950-1 bzw. ÖVE/ÖNORM EN 60950-1:2014 oder die UL508, vorgegeben werden.

Das bedeutet, dass für die Überspannungsschutzschaltung für eine Stromversorgung, welche über ein Versorgungsnetz mit einer Netzspannung von z.B. 500V versorgt wird und entsprechende Sicherheitsnormen (z.B. IEC 60950-1 bzw. ÖVE/ÖNORM EN 60950-1:2014) einhalten soll, beispielsweise Varistoren mit einem Schwellspannungswert bzw. einer Nennspannung von mindestens 25% oberhalb der Netzspannung (z.B. 500V Wechselspannung) des Versorgungsnetzes verwendet werden müssen - d.h. die Schwell- bzw. Nennspannung der Varistoren muss z.B. zumindest einen Wert von 625V (Effektivwerte der Wechselspannung) aufweisen. Bei der erfindungsgemäßen Überspannungsschutzschaltungsanordnung muss diese Nennspannung allerdings von der Serienschaltung aus erstem oder zweitem oder drittem Varistor mit dem vierten Varistor erreicht werden. Damit können am Markt verfügbare Varistoren mit geringen Schwellspannungen eingesetzt werden - z.B. für den ersten, zweiten und dritten Varistor ein Varistor mit einem Schwellspannungswert von z.B. zumindest 400V und für den vierten Varistor ein Varistor mit einem Schwellspannungswert, welcher zumindest eine Differenz zwischen dem Schwellspannungswert des ersten, zweiten oder dritten Varistor und der geforderten Nennspannung für die Serienschaltung (z.B. 625V Effektivwert der Wechselspannung) abdeckt.

In vorteilhafter Weise kann eine Serienschaltung aus dem vierten Varistor und der Sicherungseinheit zwischen dem Verbindungspunkt des ersten, zweiten und dritten Varistors und dem Schutzleiter des Versorgungsnetzes eine beliebige Reihenfolge aufweisen. D.h., die Sicherungseinheit kann in Serie zum vierten Varistor beispielsweise zwischen dem Verbindungspunkt und dem vierten Varistor oder zwischen dem vierten Varistor und dem Schutzleiter angeordnet sein. Die Schaltungsanordnung kann damit idealerweise je nach Bedarf flexibel gestaltet werden.

Weiterhin ist es günstig, wenn die Serienschaltung aus dem vierten Varistor und der Sicherungseinheit weiterhin einen Thermowiderstand aufweist, welcher zum vierten Varistor und dem Sicherungseinheit in beliebiger Reihenfolge in Serie angeordnet ist. Der Thermowiderstand kann je nach Ausgestaltung der Serienschaltung aus viertem Varistor und Sicherungseinheit optional an beliebiger Stelle - z.B. zwischen dem Verbindungspunkt des ersten, zweiten und dritten Varistors und dem vierten Varistor, zwischen dem vierten Varistor und der Sicherungseinheit oder zwischen der Sicherungseinheit und dem Schutzleiter bzw. zwischen dem Verbindungspunkt des ersten, zweiten und dritten Varistors und der Sicherungseinheit, zwischen der Sicherungseinheit und dem vierten Varistor oder zwischen dem vierten Varistor und dem Schutzleiter - in Serie eingefügt sein.

Der optional eingefügte Thermowiderstand kann in der Schaltungsanordnung beispielweise für eine Begrenzung oder Festlegung eines gegen den Schutzleiter des Versorgungsnetzes fließenden Stromes eingesetzt werden. Durch den Thermowiderstand wird beispielsweise ein Strom bzw. eine Störung beim Ansprechen der Sicherungseinheit begrenzt. Als Thermowiderstand kann ein sogenannter Negative Temperature Coeffizient- bzw. NTC-Widerstand bzw. NTC-Thermistor eigesetzt sein. Ein NTC-Widerstand oder NTC-Thermistor ist ein temperaturabhängiger Widerstand, welcher als wesentliche Eigenschaft einen negativen Temperaturkoeffizienten aufweist und einen elektrischen Strom bei hohen Temperaturen besser leitet als bei tieferen Temperaturen.

Ein bevorzugte Ausführungsform der erfindungsgemäßen Schaltungsanordnung für eine Überspannungsschutz sieht vor, dass die Sicherungseinheit als Gasableiter ausgeführt ist. Ein Gasableiter dient zum Ableiten von Überspannungen bzw. als Schutz vor Überspannungsimpulsen. Die Überspannung wird im Gasableiter durch ein selbsttätiges Zünden einer Gasentladung abgebaut, welche sich je nach auftretendem Strom bzw. auftretender Spannung beispielsweise als Glimmentladung, Funken- oder Bogenentladung ausbildet.

Alternativ kann die Sicherungseinheit auch als Thermosicherung oder Temperatursicherung ausgeführt sein. Die Thermosicherung dient zur Abschaltung eines Stromkreises bei einer Übertemperatur - d.h. eine Auslösung erfolgt nicht primär durch einen durch die Sicherung fließenden Strom, sondern durch die Temperatur der Sicherung. Die Thermosicherung kann z.B. nahe bei dem zu überwachenden Bauelement - d.h. beim vierten Varistor - angebracht sein oder z.B. auch in diesen integriert sein.

Sollte beispielsweise die für die jeweilige Schaltung bzw. Baugruppe (z.B. Schutzschaltung, etc.) gültige Norm keine zusätzliche Sicherungseinheit zum Varistor vorschreiben, so kann die Sicherungseinheit (z.B. Gasableiter) auch entfallen. In diesem Fall kann beispielsweise eine Vorrichtung zum Auftrennen einer Anbindung an den Schutzleiter (z.B. Klemme, oder Ähnliches zum Unterbrechen der Verbindung zum Schutzleiter) vorgesehen sein, um beispielsweise Isolationstests mit Hochspannung bzw. eine Hochspannungsprüfung der Schutzschaltungsanordnung durchführen zu können.

### Kurzbeschreibung der Zeichnung

Die Erfindung wird nachfolgend in beispielhafter Weise anhand der beigefügten Figuren erläutert. Es zeigen dabei:
- Figur 1: schematisch und beispielhaft eine Ausführungsform einer Überspannungsschutzschaltungsanordnung für eine Stromversorgung nach dem Stand der Technik
- Figur 2: schematisch und beispielhaft eine Ausführungsform der erfindungsgemäßen Überspannungsschutzschaltungsanordnung für eine Stromversorgung
- Figur 3: schematisch und beispielhaft eine alternative Ausführungsform der erfindungsgemäßen Überspannungsschutzschaltungsanordnung für eine Stromversorgung

### Ausführung der Erfindung

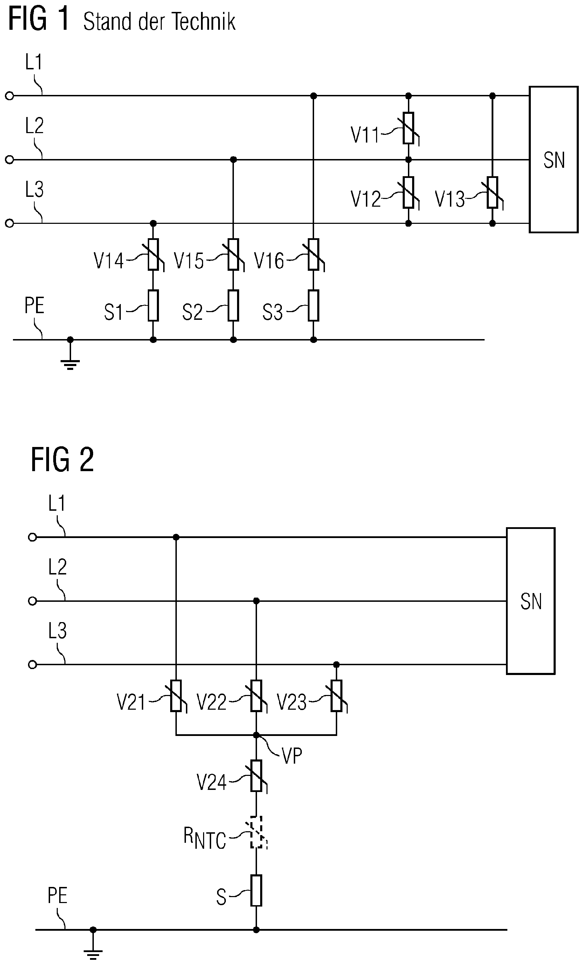

Figur 1 zeigt schematisch und beispielhaft eine Ausführungsform einer Überspannungsschutzschaltungsanordnung für eine Stromversorgung SN bzw. für ein Schaltnetzteil SN, welche aus dem Stand der Technik, wie z.B. dem Datenbuch "EPCOS Data Book 2018 - SIOV Metal Oxide Varistors" der EPCOS AG - A TDK Group Company; Edition 2018; Seite 67 bis 68, bekannt ist.

Die Stromversorgung SN bzw. das Schaltnetzteil SN wird über ein Versorgungsnetz mit einer Netzspannung (z.B. 400 bis 500V dreiphasigen Wechselspannung) versorgt. Dabei weist das Versorgungsnetz zumindest drei Außenleiter L1, L2, L3 sowie einen Schutzleiter PE auf. Dieses Versorgungsnetz kann z.B. als Stromschiene ausgestaltet sein, an welche weitere Stromversorgungen und/oder Anlagenelemente (z.B. Motoren, Antriebe, Steuersysteme, etc.) für eine Energieversorgung angeschlossen sind. Das in der Figur 1 beispielhaft dargestellte Versorgungsnetz weist weiterhin keinen so genannten Neutral- oder Nullleiter auf, welcher z.B. nicht mitgeführt wird, um eine zusätzliche Leitung einzusparen.

Für einen Schutz der Stromversorgung SN vor asymmetrischen wie symmetrischen Überspannungen wird eine Schaltung mit z.B. sechs Varistoren V11, V12, V13, V14, V15, V16 verwendet. Dabei sind beispielsweise drei Varistoren V11, V12, V13 für einen Überspannungsschutz bei symmetrischen Überspannungen bzw. Surge-Impulsen vorgesehen. Diese Varistoren V11, V12, V13 sind z.B. zwischen den Außenleitern L1, L2, L3 des Versorgungsnetzes angeordnet. So ist beispielsweise ein erster Varistor V11 zwischen einem ersten Außenleiter L1 und einem zweiten Außenleiter L2 angeordnet. Ein zweiter Varistor V12 ist zwischen dem zweiten Außenleiter L2 und einem dritten Außenleiter L3 angeordnet und ein dritter Varistor V13 ist zwischen dem ersten Außenleiter L1 und dem dritten Außenleiter L3 angebracht. Als Sicherung, welche für die jeweiligen Varistoren V11, V12, V13 z.B. aufgrund von Sicherheitsvorschriften und/oder -normen angebracht sein müssen und welche der Einfachheit halber in Figur 1 nicht dargestellt sein, können beispielsweise Zuleitungssicherungen der Stromversorgung SN genutzt werden.

Weiterhin sind drei Varistoren V14, V15, V16 für einen Überspannungsschutz bei asymmetrischen Überspannungs- bzw. Surge-Impulsen vorgesehen, welche jeweils mit einer Sicherungseinheit S1, S2, S3 in Serie geschaltet sind. Die Serienschaltung aus Varistor V14, V15, V16 und Sicherungseinheit S1, S2, S3 ist dann zwischen dem jeweiligen Außenleiter L1, L2, L3 und dem Schutzleiter PE angeordnet. D.h. ein vierter Varistor V14 ist mit einer ersten Sicherungseinheit S1 beispielsweise in Serie geschaltet, wobei ein erster Anschlusspunkt des vierten Varistors V14 z.B. mit dem dritten Außenleiter L3 elektrisch verbunden ist und ein zweiter Anschlusspunkt mit der ersten Sicherungseinheit S1, welche dann elektrisch mit dem Schutzleiter PE verbunden ist. Eine Serienschaltung aus einem fünften Varistor V15 und einer zweiten Sicherungseinheit S2 ist z.B. zwischen dem zweiten Außenleiter L2 und dem Schutzleiter PE angeordnet. Eine Serienschaltung aus einem sechsten Varistor V16 und einer dritten Sicherungseinheit S3 ist beispielsweise zwischen dem ersten Außenleiter L1 und dem Schutzleiter PE angeordnet. Die jeweiligen Sicherungseinheiten S1, S2, S3 sind dabei z.B. als Thermosicherung ausgeführt und können z.B. mit dem jeweiligen Varistor gekoppelt oder in diesen integriert sein.

Alternativ besteht die Möglichkeit beim Überspannungsschutz bei asymmetrischen Überspannungs- bzw. Surge-Impulsen den jeweiligen zweiten Anschlusspunkt des vierten, fünften und sechsten Varistors V14, V15, V16 in einem Verbindungspunkt elektrisch zu verbinden. Zwischen diesem Verbindungspunkt und dem Schutzleiter PE kann dann z.B. eine Sicherungseinheit (z.B. Thermosicherung, Gasableiter, etc.) angeordnet sein, welche dann als in Serie geschaltete Sicherungseinheit für den vierten, fünften und sechsten Varistor V14, V15, V16 dient.

Ein in Figur 1 beispielhaft dargestellte Überspannungsschutzschaltung erweist sich allerdings dahingehend als nachteilig, dass sie aufgrund der Anzahl an verwendeten Varistoren V11, V12, V13, V14, V15, V16 einen relativ hohen Platzbedarf und Kosten aufweist.

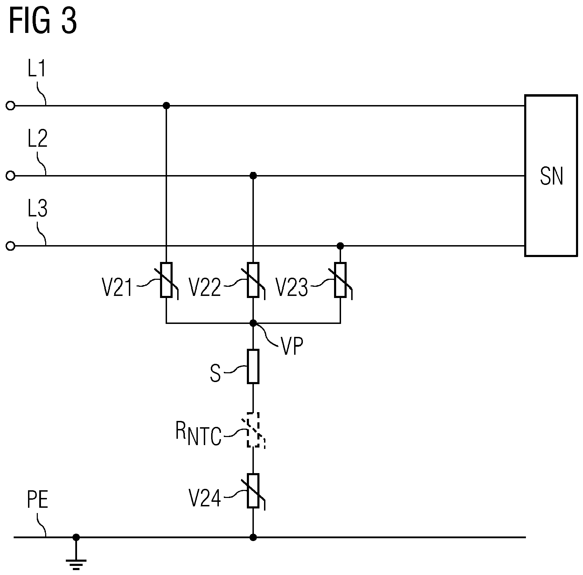

Die Figuren 2 und 3 zeigen in schematischer Weise beispielhafte Ausprägungen der erfindungsgemäßen Lösung dieser Probleme.

Figur 2 bzw. Figur 3 zeigen wieder das beispielshafte Schaltnetz SN, welches über ein Versorgungsnetz mit Außenleitern L1, L2, L3 und einen Schutzleiter PE mit einer Netzspannung (z.B. 400 bis 500V dreiphasigen Wechselspannung) versorgt wird. Zum Schutz der Stromversorgung SN bzw. des Schaltnetzteils SN vor symmetrischen wie asymmetrischen Überspannungs- bzw. Surge-Impulsen sind die beispielhaften Ausprägungsvarianten der erfindungsgemäßen Überspannungsschutzschaltungsanordnung vorgesehen.

Diese Überspannungsschutzanordnung umfasst einen ersten Varistor V21, welcher mit einem ersten Anschlusspunkt mit dem ersten Außenleiter L1 elektrisch verbunden ist. Weiterhin umfasst die die Überspannungsschutzanordnung einen zweiten Varistor V22, welcher mit einem ersten Anschlusspunkt mit dem zweiten Außenleiter L2 elektrisch verbunden ist, und einen dritten Varistor V23, welcher mit einem ersten Anschlusspunkt mit dem dritten Außenleiter L3 elektrisch verbunden ist. Der zweite Anschlusspunkt des ersten Varistors V21 ist mit dem zweiten Anschlusspunkt des zweiten Varistors V22 und mit dem zweiten Anschlusspunkt des dritten Varistors V23 in einem Verbindungspunkt VP bzw. künstlichen Sternpunkt VP elektrisch verbunden.

Weiterhin weist die erfindungsgemäße Überspannungsschutzschaltungsanordnung einen vierten Varistor V24 auf. Der vierte Varistor V24 ist mit einem ersten Anschlusspunkt mit dem Verbindungspunkt VP des ersten, zweiten und dritten Varistors V21, V22, V23 elektrisch verbunden. Ein zweiter Anschlusspunkt des vierten Varistors V24 ist mit dem Schutzleiter PE des Versorgungsnetzes elektrisch verbunden. Dabei ist zum vierten Varistor V24 eine in Serie angeordnete Sicherungseinheit S vorgesehen, welche beispielsweise als Gasableiter oder als Thermosicherung ausgeführt sein kann.
Eine Serienschaltung aus viertem Varistor V24 und der Sicherungseinheit S kann eine beliebige Reihenfolge aufweisen. In Figur 2 ist beispielsweise die Sicherungseinheit S zwischen dem zweiten Anschlusspunkt des vierten Varistors V24 und dem Schutzleiter PE des Versorgungsnetzes in Serie zum vierten Varistor V24 angeordnet.

Optional kann die Serienschaltung aus viertem Varistor V24 und der Sicherungseinheit S einen Thermowiderstand R_{NTC} aufweisen. Mit Hilfe des Thermowiderstands R_{NTC} kann beispielsweise ein gegen den Schutzleiter PE des Versorgungsnetzes fließender Strom begrenzt oder festgelegt werden. Der Thermowiderstand R_{NTC} kann dazu zum vierten Varistor und zur Sicherungseinheit S in Serie in beliebiger Reihenfolge angeordnet sein.

So kann der optional eingefügte Thermowiderstand R_{NTC} - wie in Figur 2 strichliert und beispielhaft dargestellt - beispielsweise zwischen dem vierten Varistor V24 und der Sicherungseinheit S angeordnet sein. Alternativ kann der Thermowiderstand R_{NTC} auch zwischen dem Verbindungspunkt VP und dem ersten Anschlusspunkt des vierten Varistors V24 oder zwischen der Sicherungseinheit S und dem Schutzleiter PE in Serie eingefügt sein, wenn die Serienschaltung aus viertem Varistor V24 und Sicherungseinheit S z.B. derart ausgestaltet ist, wie in Figur 2 beispielhaft dargestellt.

Alternativ kann die Sicherungseinheit S auch in Serie zum vierten Varistor V24 zwischen dem Verbindungspunkt VP des ersten, zweiten und dritten Varistors V21, V22, V23 und dem ersten Anschlusspunkt des vierten Varistors V24 angebracht sein, wie beispielhaft und schematisch in Figur 3 dargestellt. Bei einer wie in Figur 3 beispielhaft dargestellten Serienschaltung aus viertem Varistor V24 und Sicherungseinheit S kann der optional eingefügte Thermowiderstand R_{NTC} (in Figur 3 ebenfalls beispielhaft und strichliert dargestellt) z.B. zwischen der Sicherungseinheit S und dem vierten Varistor V24 angeordnet sein. Alternativ kann der Thermowiderstand R_{NTC} auch zwischen dem Verbindungspunkt VP des ersten, zweiten und dritten Varistors V21, V22, V23 und der Sicherungseinheit S oder zwischen dem zweiten Anschlusspunkt des vierten Varistors V24 und dem Schutzleiter PE in Serie angeordnet sein.

Als Sicherung, welche beim ersten, zweiten und dritten Varistoren V21, V22, V23 z.B. aufgrund von Sicherheitsvorschriften und/oder -normen in Serie vorgesehen sein müssen, können beispielsweise Zuleitungssicherungen der Stromversorgung SN genutzt werden. Der Einfachheit halber sind diese Sicherungen in Figur 2 bzw. Figur 3 nicht dargestellt.

Bei den in der erfindungsgemäßen Überspannungsschutzschaltungsanordnung eingesetzten Varistoren V21, V22, V23. V24 kann idealerweise vorgesehen sein, dass als erster, zweiter und dritter Varistor V21, V22, V23 ein Varistor mit einem ersten Schwell- bzw. Nennspannungswert und als vierter Varistor V24 ein Varistor mit einem zweiten Schwell- bzw. Nennspannungswert eingesetzt wird. Dabei werden die Varistoren V21, V22, V23, V24 derart gewählt, dass von einem Schwellspannungswert einer Serienschaltung aus erstem Varistor V21 und viertem Varistor V24 bzw. aus zweitem Varistor V22 und viertem Varistor V24 bzw. aus drittem Varistor V23 und viertem Varistor V24 ein Summenwert aus einem maximal zulässig auftretenden Wert der Netzspannung und einem vorgegebenen Toleranzwert zumindest erreicht oder überschritten wird. Der Toleranzwert (z.B. +/- 25%) kann beispielweise durch eine Schutzvorschrift oder -norm (z.B. die IEC 60905-1 bzw. ÖVE/ÖNORM EN 60950-1:2014 oder die UL508) vorgegeben werden.

D.h., dass bei einem vorgegebenen Toleranzwert von z.B. +/-25 % und einer dreiphasigen Netzspannung mit einem maximal zulässigen Effektivwert von 500 V von der Serienschaltung aus erstem Varistor V21 und viertem Varistor V24 bzw. aus zweitem Varistor V22 und viertem Varistor V24 bzw. aus drittem Varistor V23 und viertem Varistor V24 zumindest ein Schwellspannungswert von z.B. 625V (Effektivwert) abgesichert bzw. erreicht bzw. überschritten werden muss. Durch den Verbindungspunkt VP bzw. künstlichen Sternpunkt, über welchen der erste, der zweite und der dritte Varistor V21, V22, V23 verbunden sind, entfallen auf den ersten, zweiten und dritten Varistor V21, V22, V23 jeweils der Summenwert aus maximal zulässiger Nennspannung (z.B. 500V Effektivwert) und vorgegebene Toleranzwert (z.B. +/- 25%) dividiert durch einem Faktor √3. D.h. der erste, zweite und dritte Varistor V21, V22, V23 muss jeweils als entsprechenden ersten Schwell- bzw. Nennspannungswert den Summenwert/√3 (bei einer Netzspannung von 500V z.B. zumindest 361V (Effektivwert)) aufweisen, wobei beispielsweise als erste, zweiter und dritter Varistor V21, V22, V23 am Markt verfügbare Varistoren mit einem nächstgelegenen höheren Norm- bzw. Schwellspannungswert (z.B. 400V Effektivwert) als dem ermittelten ersten Schwell- bzw. Nennspannungswert ausgewählt werden können.

Der vierte Varistor V24, welcher mit der Sicherungseinheit S in Serie angeordnet bzw. mit dem Schutzleiter PE elektrisch verbunden ist, kann dann einen zweiten Schwell- bzw. Nennspannungswert aufweisen, welcher zumindest einer Differenz aus Summenwert (maximal zulässige Netzspannung + Toleranzwert) und dem ersten Schwell- bzw. Nennspannungswert des ersten, zweiten oder dritten Varistor V21, V22, V23 entspricht bzw. diese Differenz übersteigt. D.h. bei beispielsweise einer Netzspannung von 500V und einem Toleranzwert von 25% mit einem Summenwert von z.B. zumindest 625V (Effektivwert) muss der zweite Schwell- bzw. Nennspannungswert für den vierten Varistor V24 zumindest ca. 264V (Effektivwert) betragen. Auch für den vierten Varistor V24 kann dann beispielsweise ein am Markt verfügbarer Varistor mit einem nächstgrößeren Norm- bzw. Schwellspannungswert als dem ermittelten zweiten Schwell- bzw. Nennspannungswert ausgewählt werden.

Die in den Figuren 2 und 3 dargestellten Ausführungsformen stellen beispielhaft spezifische Basisvarianten der erfindungsgemäßen Überspannungsschutzschaltungsanordnung und keine Einschränkung auf spezielle Ausführungsformen dar. Derartige Basisvarianten können beispielsweise durch ergänzende Bauelemente (z.B. Widerstände, Induktivitäten, etc.), welche parallel oder in Serie zu der in Figur 2 oder 3 dargestellten Basisvariante der erfindungsgemäßen Schaltung angebracht werden können, abgeändert werden - ohne die Grundfunktion des Schutzes einer Stromversorgung bzw. eines Schaltnetzteils insbesondere vor Überspannungs- bzw. Surge-Impulsen durch der erfindungsgemäßen Schaltungsanordnung im Wesentlichen zu verändern. Auch derartige Anpassungen, Äquivalente und Modifikationen sollen von der gegenständlichen Erfindung umfasst werden.

## Patentansprüche

1. Überspannungsschutzschaltungsanordnung für eine Stromversorgung (SN) bzw. ein Schaltnetzteil (SN), welches über ein Versorgungsnetz mit einer Netzspannung versorgt wird, wobei das Versorgungsnetz zumindest drei Außenleiter (L1, L2, L3) und einen Schutzleiter (PE) aufweist, umfassend:
- einen ersten Varistor (V21), welcher mit einem jeweiligen ersten Anschlusspunkt elektrisch mit einem ersten Außenleiter (L1) des Versorgungnetzes verbunden ist,
- einen zweiten Varistor (V22), welcher mit einem jeweiligen ersten Anschlusspunkt mit einem zweiten Außenleiter (L2) des Versorgungnetzes elektrisch verbunden ist,
- einen dritten Varistor (V23), welcher mit einem jeweiligen ersten Anschlusspunkt mit einem dritten Außenleiter (L3) des Versorgungnetzes elektrisch verbunden ist, wobei der erste, zweite und dritte Varistor (V21, V22, V23) mit einem jeweiligen zweiten Anschlusspunkt elektrisch in einem Verbindungspunkt (VP) miteinander verbunden sind; und
- einen vierten Varistor (V24), welcher mit einem ersten Anschlusspunkt elektrisch mit dem Verbindungspunkt (VP) des ersten, zweiten und dritten Varistors (V21, V22, V23) und mit einem zweiten Anschlusspunkt mit dem Schutzleiter (PE) des Versorgungsnetzes verbunden ist, wobei zum vierten Varistor (V24) eine Sicherungseinheit (S) in Serie angeordnet ist.

2. Schaltungsanordnung nach Anspruch 1, ***dadurch gekennzeichnet, dass*** der erste, zweite und dritte Varistor (V21, V22, V23) einen ersten vorgegebenen Schwellspannungswert und der vierte Varistor (V24) ein zweiten vorgegebenen Schwellspannungswert derart aufweisen, dass von einem Schwellspannungswert einer Serienschaltung aus erstem Varistor (V21) oder zweitem Varistor (V22) oder drittem Varistor (V23) mit dem vierten Varistor (V24) ein Summenwert zumindest erreicht oder überschritten wird, wobei der Summenwert aus einem maximal zulässig auftretenden Wert der Netzspannung für das Schaltnetzteil (SN) und einem vorgegebenen Toleranzwert besteht.

3. Schaltungsanordnung nach einem der Ansprüche 1 oder 2, ***dadurch gekennzeichnet, dass*** eine Serienschaltung aus dem vierten Varistor (V24) und der Sicherungseinheit (S) zwischen dem Verbindungspunkt (VP) des ersten, zweiten und dritten Varistors (V21, V22, V23) und dem Schutzleiter (PE) des Versorgungsnetzes eine beliebige Reihenfolge aufweist.

4. Schaltungsanordnung nach einem der Ansprüche 1 bis 3, ***dadurch gekennzeichnet, dass*** die Serienschaltung aus dem vierten Varistor (V24) und der Sicherungseinheit (S) weiterhin einen Thermowiderstand (R_{NTC}) aufweist, welcher zum vierten Varistor und dem Sicherungseinheit (S) in Serie in beliebiger Reihenfolge angeordnet ist.

5. Schaltungsanordnung nach einem der Ansprüche 1 bis 4, ***dadurch gekennzeichnet, dass*** die Sicherungseinheit (S) als Gasableiter ausgeführt ist.

6. Schaltungsanordnung nach einem der Ansprüche 1 bis 4, ***dadurch gekennzeichnet, dass*** die Sicherungseinheit (S) als Thermosicherung ausgeführt ist.
